# EUROPEAN PATENT APPLICATION

(11) **EP 2 926 656 A1**
(43) Date of publication of application: **07.10.2015**
(21) Application number: 13860528.2
(22) Date of filing: 03.12.2013
(51) Int. Cl.: A01M 1/20, A01N 25/06, A01N 25/12, A01N 51/00, A01N 53/08, A01P 7/04

(54) **DEVICE FOR SPRAYING POWDERY CHEMICAL AGENT AND PROCESS FOR SPRAYING POWDERY CHEMICAL AGENT**

(30) Priority: 03.12.2012 JP 2012264384
(71) Applicant: Earth Chemical Co., Ltd., Chiyoda-ku Tokyo 101-0048 (JP)
(72) Inventor: MIYAJI Ryuta, Ako-shi Hyogo 678-0192 (JP); ATARASHI Mikihiko, Ako-shi Hyogo 678-0192 (JP); MATSUBARA Akira, Ako-shi Hyogo 678-0192 (JP)
(74) Representative: Grünecker Patent- und Rechtsanwälte PartG mbB
(86) International application number: PCT/JP2013/082505
(87) International publication number: WO 2014/088013

(57) **Abstract**

A device (1) for spraying a powdery chemical agent is provided with: a container body (11) in which water (51) is to be put; a cylindrical body (23) which is set so as to penetrate a cap (21) that covers a top opening (13) and both ends of which are present respectively in the inside and outside of the container body (11); one pair of sealing films (25,27) which seal respectively both ends of the cylindrical body (23) that is loaded with a powdery chemical agent (30) and which can be broken by the action of a pressure equal to or higher than a prescribed level; and sodium bicarbonate (41) and citric acid (43) which react with the water (51) present in the container body (11) to generate a reaction gas.

## Description

### TECHNICAL FIELD

The present invention relates to a device for spraying powdery chemical agent for spraying and diffusing the powdery chemical agent, such as an insecticide, etc., and a method for spraying powdery chemical agent.

### BACKGROUND ART

In order to exterminate insect pests existing in the interior of a room, as an insecticide of a single-use type of spreading the whole amount of a chemical agent in the interior of the room, there have hitherto been known various types inclusive of not only a fumigation type to be used by burning an insecticidal composition but also a type not using a fire, such as a thermal evaporation type using water, an aerosol type for spraying by a propellant, a pump type of spraying a solution by a pump, etc.

The insecticide of a fumigation type is one in which a combination of an insecticidal component with an exothermic agent and an auxiliary heating agent is charged in a container. The insecticidal component or combusting agent is burnt by ignition with a starting tool. On that occasion, finely divided particles of the insecticidal component are spread as a smoke in the interior of a room (see Patent Document 1).

In the insecticide of a thermal evaporation type, the insecticidal component is diffused from a container heated by a heat of reaction of water and calcium oxide, etc. by a power of a foaming agent (see Patent Document 2).

The insecticide of an aerosol type is one in which the insecticidal component is dissolved in a liquefied gas, such as an LP gas, etc., and compression filled in a pressure resistant container, and the insecticidal component is sprayed in the form of a fine mist. The single-use type has a structure in which a push button is irreversibly locked, and the whole amount of the chemical agent is sprayed (see Patent Document 3).

The insecticide of a pump type is one in which the insecticidal component is dissolved in a solvent and contained in a liquid container, and the insecticidal component is spouted out in the form of a fine mist by the action of a pressure pump connected with the liquid container (see Patent Document 4).

### CITATION LIST

### PATENT DOCUMENTS

Patent Document 1: JP-A-2003-289782
Patent Document 2: JP-A-2007-326851
Patent Document 3: JP-A-2006-035065
Patent Document 4: JP-A-2011-011181

### SUMMARY OF INVENTION

### TECHNICAL PROBLEM

However, the above-described conventional insecticides of a single-use type involved such a problem that the insecticidal component capable of being used is restricted. That is, in the insecticides of a fumigation type or a thermal evaporation type, since the insecticidal component is heated at an extremely high temperature, it is easily decomposed, and hence, insecticidal components that are weak to heat cannot be used. In addition, in the insecticides of an aerosol type or a pump type, the insecticidal component is dissolved in a solvent or a liquefied gas and sprayed, and thus, insecticidal components which are low in solubility or insecticidal components that are instable in a liquid state cannot be used.

Furthermore, in the insecticides of these types, when the combusting agent is burnt, or the foaming agent is decomposed, a solvent apart from the insecticidal component or a medium, such as a decomposed gas (acidic gas), a liquefied gas, etc., is spread in the interior of a room. Then, advance preparations, such as covering a precision instrument, e.g., a personal computer, an audio instrument, etc., covering a fire alarm, extinguishing a pilot light of a gas water heater, etc., are necessary.

In consequence, in view of the foregoing circumstances, the present invention has been made, and an object thereof is to provide a device for spraying powdery chemical agent which is free from the decomposition of a chemical agent due to heat or the like and which is capable of diffusing a powdery chemical agent without using a medium, such as a decomposed gas, a liquefied gas, a solvent, etc., and a method for spraying powdery chemical agent.

### SOLUTION TO PROBLEM

The foregoing object of the present invention is attained by the following constitutions.
(1) A device for spraying powdery chemical agent, the device including:
   a container body having an upper end opening;
   a cylindrical body installed in a lid body covering the upper end opening, both ends of the cylindrical body facing an interior and an exterior of the container body;
   a powdery chemical agent that is a chemical agent itself, or in which a chemical agent is impregnated or mixed with a powder, the powdery chemical agent being contained in the cylindrical body; and
   a sealing film that seals at least one end part of the interior side of the container body in the both ends of the cylindrical body in which the powdery chemical agent is contained,
   wherein a reactive gas is generated within the container body to break the sealing film.
(2) A device for spraying powdery chemical agent, the device including:
   a container body having an upper end opening,
   a cylindrical body installed in a lid body covering the upper end opening, both ends of the cylindrical body facing an interior and an exterior of the container body;
   a powdery chemical agent that is a chemical agent itself, or in which a chemical agent is impregnated or mixed with a powder, the powdery chemical agent being contained in the cylindrical body; and
   sealing films that seal the both ends of the cylindrical body in which the powdery chemical agent is contained, respectively,
   wherein the sealing film for sealing the other end part of the exterior side of the container body in the both ends of the cylindrical body is made to have a film strength equal to the sealing film for sealing one end part of the interior side of the container body or such that the sealing film for sealing the other end part is easily broken a little bit rather than the sealing film for sealing the one end part; and
   wherein a reactive gas is generated within the container body to break the sealing films.
(3) A method for spraying powdery chemical agent, the method including the steps of:
   generating a reactive gas within a container body having an upper end opening;
   mounting a lid body, in which a cylindrical body is installed, to the upper end opening of the container body such that both ends of the cylindrical body face an interior and an exterior of the container body, a powdery chemical agent that is a chemical agent itself, or in which a chemical agent is impregnated or mixed with a powder, being contained in the cylindrical body, and at least end part at an interior side of the container body in both ends of the cylindrical body being sealed by a sealing film; and
   breaking the sealing film by a gas pressure of the reactive gas reaching a prescribed value or more, thereby spraying and diffusing the powdery chemical agent contained in the cylindrical body.

According to the device for spraying powdery chemical agent of the constitution as set forth above in (1), for example, in view of the fact that a gas generating agent reacts with a liquid or the like within the container body to generate the reactive gas, the inside of the container body becomes high in pressure. When a gas pressure of this reactive gas reaches a prescribed value or more, the sealing film that seals the open end of the cylindrical body is broken, whereby the powdery chemical agent is sprayed and diffused at once outside the cylindrical body due to the air pressure of the high-pressure gas within the container body. That is, the reactive gas for spraying and diffusing the powdery chemical agent is confined in the container body until the gas pressure reaches a prescribed value or more, and when the gas pressure reaches the prescribed value or more, the sealing film is broken, whereby the powdery chemical agent is sprayed at once. Then, a high-pressure reactive gas may be obtained without generating the reactive gas at once by an explosive reaction accompanied with heat.

In consequence, it is not needed to fume a fumigant by combustion of a chemical agent or to thermally evaporate a chemical agent using a hydration exothermic agent for indirectly heating a foaming agent as in the conventional art. As a result, the heat is not applied to the powdery chemical agent, so that chemical agents that are weak to heat may be used. In addition, it is not needed to dissolve a chemical agent in a solvent or a liquefied gas as in the aerosol type or pump type, so that chemical agents that are low in solubility, or chemical agents that are instable in a solution state may also be used.

According to the device for spraying powdery chemical agent of the constitution as set forth above in (2), immediately after the air pressure of the high-pressure gas breaks the sealing film for sealing one end part of the interior side of the container body, the sealing film for sealing the other end part of the exterior side of the container body may be broken, whereby the powdery chemical agent within the cylindrical body is surely sprayed and diffused outside the cylindrical body without falling within the container body.

In addition, at the time of preservation, since the powdery chemical agent is hermetically sealed in the cylindrical body, the both ends of which are each sealed by the sealing film, its handling is easy. Moreover, the powdery chemical agent in the cylindrical body may also be prevented from occurrence of decomposition by moisture of the outside air or oxidation, so that it may be stably preserved.

According to the powdery chemical agent spraying method of the constitution as set forth above in (3), when the reactive gas is generated within the container body, and the gas pressure of the reactive gas reaches a prescribed value or more, the sealing film that seals at least end part at the interior side of the container body in the both ends of the cylindrical body is broken, whereby the powdery chemical agent is sprayed and diffused at once outside of the cylindrical body due to the air pressure of the high-pressure gas within the container body. That is, the reactive gas for spraying and diffusing the powdery chemical agent is confined within the container body until the gas pressure reaches a prescribed value or more, and when the gas pressure reaches the prescribed value or more, the sealing film is broken, whereby the powdery chemical agent is sprayed at once. Then, a high-pressure reactive gas may be obtained without generating the reactive gas at once by an explosive reaction accompanied with heat.

In consequence, it is not needed to fume a fumigant by a combusting agent or heat of a heating element, or to evaporate a powdery chemical agent by heating a foaming agent and utilizing a decomposed gas generated when the foaming agent is decomposed as in the conventional fumigation type or thermal evaporation type. As a result, the heat is not applied to the powdery chemical agent, so that chemical agents that are weak to heat may also be used. In addition, it is not needed to dissolve a chemical agent in a solvent or a liquefied gas as in the conventional aerosol type or pump type, so that chemical agents that are low in solubility, or chemical agents that are instable in a liquid state may also be used.

### ADVANTAGEOUS EFFECTS OF INVENTION

According to the device for spraying powdery chemical agent and the powdery chemical agent spraying method of the present invention, the powdery chemical agent may be diffused without using a medium, such as a decomposed gas, a solvent, etc. In addition, it is not needed to dissolve the powdery chemical agent in a solvent or a liquefied gas, and it is not needed to apply heat for diffusion, and thus, chemical agents that are low in solubility, chemical agents that are instable in a liquid state, and chemical agents that are easily decomposed by heat can be used.

In addition, at the time of preservation, in view of the fact that the powdery chemical agent is hermetically sealed in the cylindrical body, the both ends of which are sealed, its handling is easy. Moreover, the powdery chemical agent in the cylindrical body can also be prevented from occurrence of decomposition by moisture of the outside air or oxidation, so that it can be stably preserved. It is to be noted that at the time of use, the sealing film or sealing member that seals the other end part of the exterior side of the container body in the cylindrical body may be removed in advance.

Furthermore, according to the device for spraying powdery chemical agent and the powdery chemical agent spraying method of the present invention, it is not needed to use a fixed power source, heat from a flame, or the like, and thus, there is no concern about a fire or the like, and the device is safe; and a large-scaled apparatus is not needed, and thus, the device can be carried simply and easily and can be used even in a place where equipment, such as a power source, etc., is not provided.

In the light of the above, the present invention has been concisely explained. Furthermore, details of the present invention will be further clarified by reading modes for carrying out the invention as explained below (hereinafter referred to as "embodiments") by reference to accompanying drawings.

### BRIEF DESCRIPTION OF DRAWINGS

FIG. 1 is a longitudinal section illustrating a device for spraying powdery chemical agent according to an embodiment of the present invention.
FIGs. 2(a) to 2(d) are each an explanatory view for explaining procedures of a powdery chemical agent spraying method for spraying and diffusing a powdery chemical agent using the device for spraying powdery chemical agent shown in FIG. 1.
FIG. 3 is a diagrammatic plan view for explaining a test plot used for a test of confirming a spraying effect of a device for spraying powdery chemical agent using a rolling pump.
FIG. 4 is a diagrammatic plan view for explaining a test plot used for a test of confirming an insect pest-controlling effect by the device for spraying powdery chemical agent shown in FIG. 1.
FIG. 5 is a diagrammatic plan view for explaining a test plot used for a test of confirming an insect pest-controlling effect of a device for spraying powdery chemical agent using a rolling pump.
FIG. 6 is a diagrammatic plan view for explaining a test plot used for a test of confirming an insect pest-controlling effect by the device for spraying powdery chemical agent shown in FIG. 1.
FIG. 7 is a longitudinal sectional view illustrating an outline of a conventional pump type spraying device used in Comparative Example 1.
FIG. 8 is a longitudinal sectional view illustrating an outline of a conventional thermal evaporation device used in Comparative Example 2.
FIG. 9 is a diagrammatic plain view for explaining a test plot used for confirming an insect pest-controlling effect by the thermal evaporation device shown in FIG. 8.

### DESCRIPTION OF EMBODIMENTS

An embodiment of the present invention is hereunder explained in detail by reference to the accompanying drawings.

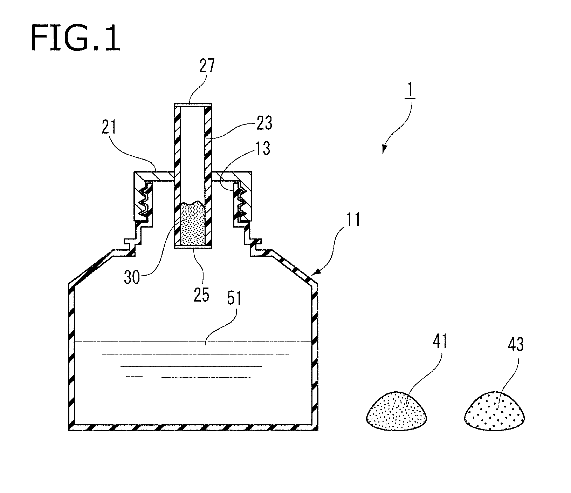

As shown in FIG. 1, a powdery chemical agent spraying device 1 of an embodiment of the present invention includes a container body 11 having an upper end opening 13 and housing water (liquid) 51 therein, a cylindrical body 23 installed in a lid body 21 covering the upper end opening 13, both open ends of the cylindrical body 23 facing an interior and an exterior of the container body 11, a powdery chemical agent 30 contained in the cylindrical body 23, a pair of sealing films 25 and 27 that respectively seal the both open ends of the cylindrical body 23 containing the powdery chemical agent 30 therein and on which are broken when a pressure of a prescribed value or more acts; and sodium bicarbonate 41 and citric acid 43 as a gas generating agent to be introduced into the container body 11 to react with the water 51 within the container body 11, thereby generating a reactive gas.

The container body 11 of the embodiment of the present invention is a pressure resistant container having the upper end opening 13 and integrally molded with a resin, such as PET (polyethylene terephthalate), etc. The container body 11 may take a variety of shapes so long as it has a shape having the upper end opening 13 and capable of being stably placed on the floor face. In addition, so long as the container body 11 has prescribed pressure resistance to an increase of the internal pressure (for example, pressure resistance of 200 kPa or more in the case of using a film as described above), it is not limited to a resin container, but a variety of containers, such as metal containers, ceramic containers, glass containers, etc., may be used.

The lid body 21 is a closed-end cylindrical cap which is screwed on a thread provided on the outer peripheral surface of the upper end opening 13 of the container body 11, and the cylindrical body 23 is installed penetrating through the center of the bottom thereof.

The cylindrical body 23 is a cylindrical acrylic pipe, both ends of which are opened. In view of the fact that the installed lid body 21 is fitted to the upper end opening 13 of the container body 11, the both open ends of the cylindrical body 23 are arranged so as to face an interior and an exterior of the container body 23, respectively.

The powdery chemical agent 30 is housed within the cylindrical body 23, and the both open ends of the cylindrical body 23 are sealed by a pair of the sealing films 25 and 27, respectively. As the sealing films 25 and 27, for example, a Parafilm (trade name: PARAFILM M, Model No.: PM996, manufactured by Pechiney Plastic Packaging, Inc.) may be used. A variety of films may be used for the sealing films 25 and 27 without being limited to the Parafilm so long as in order to jet the powdery chemical agent into a living room having a floor area of, for example, about 9 m², they may be broken when a pressure of a prescribed value of about 80 to 100 kPa or more acts. In addition, so long as the used film is stretchable, any film may be used regardless of the presence or absence of stretching. In addition, even a non-stretchable film may be similarly used.

The sealing film 27 for sealing the upper open end (other end part) of the cylindrical body 23 locating on the exterior side of the container body 11 is formed in a thickness substantially equal to that of the sealing film 25 for sealing the lower open end (one end part) of the cylindrical body 23 locating on the interior side of the container body 11, and the sealing film 27 is made to have a film strength equal to the sealing film 25 or such that it is easily broken.

The powdery chemical agent 30 is, for example, one in which a chemical agent, such as cyphenothrin that is a pyrethroid-based insecticide, dinotefuran that is a non-volatile insecticide, etc., is impregnated or mixed with, for example, calcium silicate (trade name: FLUORITE RN, manufactured by Tokuyama Corporation) that is an inorganic powder, or a starch powder (trade name: AMYCOL H, manufactured by Nippon Starch Chemical Co., Ltd.) that is an organic powder. It is to be noted that a variety of powders inclusive of in addition to inorganic powders, such as calcium silicate, silicic anhydride, etc., organic powders, such as a cellulose powder, a starch powder, etc., and the like may be used. In addition, as a matter of course, the chemical agent which is impregnated or mixed with the powder is not limited to insecticides containing an insecticidal component as an active ingredient, but a variety of chemical agents, such as an aromatic, a deodorant, etc., may be used. In addition, a chemical agent that is a powder itself may also be used as the powdery chemical agent.

In the embodiment of the present invention, the liquid which is housed within the container body 11 is the water 51, and the gas generating agent is the sodium bicarbonate 41 and the citric acid 43, respectively. Then, after opening the lid body 21 and pouring the water 51 from the upper end opening 13 into the container body 11, when the sodium bicarbonate 41 and the citric acid 43 are introduced, they react with each other in the water 51, thereby generating carbon dioxide (reactive gas). It is to be noted that needless to say, the liquid or the gas generating agent is not limited to the water 51 or the sodium bicarbonate 41 and the citric acid 43, but a variety of liquids or gas generating agents may be used. However, the reactive gas generated by the gas generating agent is desirably one that is not only noninflammable but also innoxious against a human body or the like and does not generate high heat at the time of reaction, such as carbon dioxide, etc.

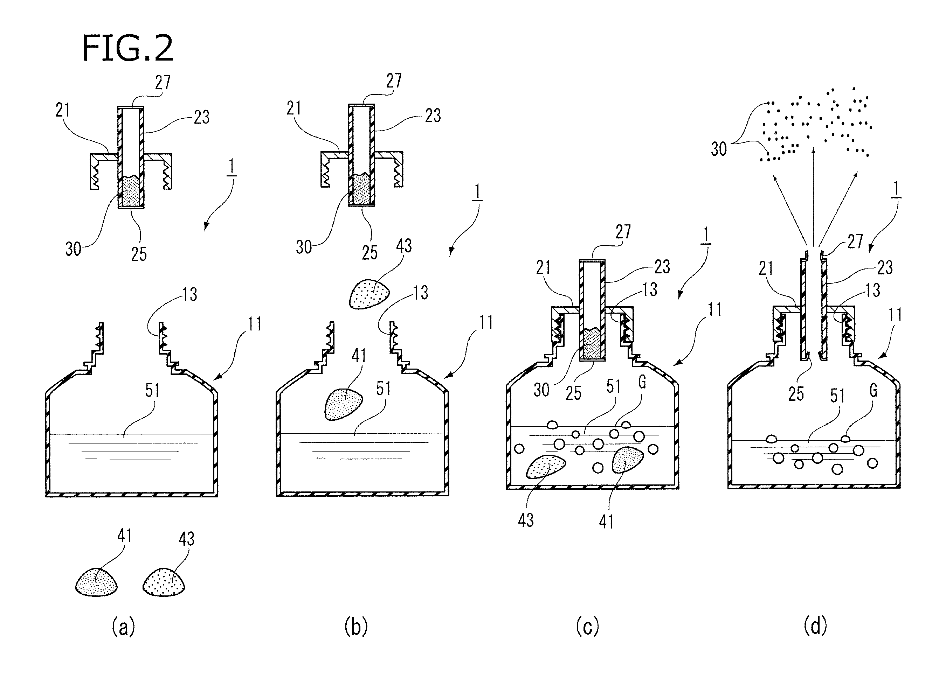

Next, procedures of a powdery chemical agent spraying method for spraying and diffusing an insecticide using the powdery chemical agent spraying device 1 of the above-described embodiment of the present invention are explained by reference to FIGs. 2(a) to 2(d). For the purpose of spreading the insecticide to exterminate insect pests existing in the interior of a room, such as a cockroach, a tropical rat mite, etc., the powdery chemical agent spraying device 1 is placed in the center of a floor of the room and used.

First of all, as shown in FIG. 2(a), the lid body 21 of the powdery chemical agent spraying device 1 is opened, and a prescribed amount of the water 51 is poured from the upper end opening 13 into the container body 11. As for the amount of the water 51 to be poured, the water 51 may be poured up to a scale provided in the container body 11 formed of a transparent or translucent resin, or a previously measured amount of the water 51 may be poured.

In addition, a prescribed amount of a water absorptive polymer having water held therein may also be previously housed within the container body 11.

Subsequently, as shown in FIG. 2(b), the sodium bicarbonate 41 and the citric acid 43 are introduced into the container body 11, and the lid body 21 is then screwed on the upper end opening 13, thereby hermetically sealing the inside of the container body 11. On this occasion, the powdery chemical agent 30 is charged, and the lid body 21 provided with the cylindrical body 23 is installed in the upper end opening 13 such that the both ends of the cylindrical body 23 face an interior and an exterior of the container body 11. Both end openings of the cylindrical body 23 are sealed by a pair of the sealing films 25 and 27, respectively.

It is to be noted that by sealing a gas generating agent composed of the sodium bicarbonate 41 and the citric acid 43 in a film or the like and previously setting the film in a lower part of the cylindrical body 23 and then unsealing the film utilizing some unsealing mechanism at the time of use, the gas generating agent may be introduced into the water 51.

At that time, as shown in FIG. 2(c), the sodium bicarbonate 41 and the citric acid 43 react with each other in the water 51, thereby generating carbon dioxide (reactive gas G). The carbon dioxide generated within the container body 11 gradually increases, whereby the pressure within the container body 11 becomes high.

Then, as shown in FIG. 2(d), for example, in the case of using a Parafilm as the sealing film without being stretched, when the gas pressure of the carbon dioxide within the container body 11 reaches 80 to 100 kPa or more, the sealing films 25 and 27 that seal the both open ends of the cylindrical body 23 are broken, whereby the powdery chemical agent 30 is sprayed and diffused at once outside the cylindrical body 23 due to the air pressure of the high-pressure carbon dioxide within the container body 11.

The sealing film 27 for sealing the other end part of the exterior side of the container body 11 is made to have a film strength equal to the sealing film 25 for sealing the one end part of the interior side of the container body 11 or such that the sealing film 27 is easily broken a little bit rather than the sealing film 25, and thus, immediately after the air pressure of carbon dioxide breaks the sealing film 25 on the interior side, the sealing film 27 on the exterior side may be easily broken. Then, the powdery chemical agent 30 within the cylindrical body 23 is surely sprayed and diffused outside the cylindrical body 23 without causing the matter that the sealing film 27 on the exterior side is not able to be broken to fall within the container body 11.

That is, the carbon dioxide for spraying and diffusing the powdery chemical agent 30 is confined within the container body 11 until the gas pressure of the carbon dioxide reaches a prescribed value or more, and when the gas pressure reach the prescribed value or more, the sealing films 25 and 27 are broken, whereby the powdery chemical agent 30 is sprayed at once. For that reason, high-pressure carbon dioxide may be obtained without generating the reactive gas at once by an explosive reaction accompanied with heat.

In consequence, in the powdery chemical agent spraying device 1 of the embodiment of the present invention, it is not needed to fume a fumigant by heat of a heating element, or to thermally evaporate an insecticide as the chemical agent using a hydration exothermic agent utilizing a medium gas, such as an acidic gas, etc., as in the conventional fumigation type or thermal evaporation type. As a result, the heat is not applied to an insecticidal component as the chemical agent of the powdery chemical agent 30, so that insecticidal components that are weak to heat may also be used. In addition, it is not needed to dissolve an insecticidal component in a solvent or a liquefied gas as in the conventional aerosol type or pump type, so that insecticidal components that are low in solubility, or insecticidal components that are instable in a solution state may also be used.

According to the powdery chemical agent spraying device 1 and the powdery chemical agent spraying method of the embodiment of the present invention as described above, the insecticide as the chemical agent may be diffused without using a medium, such as a gas, a solvent, etc.

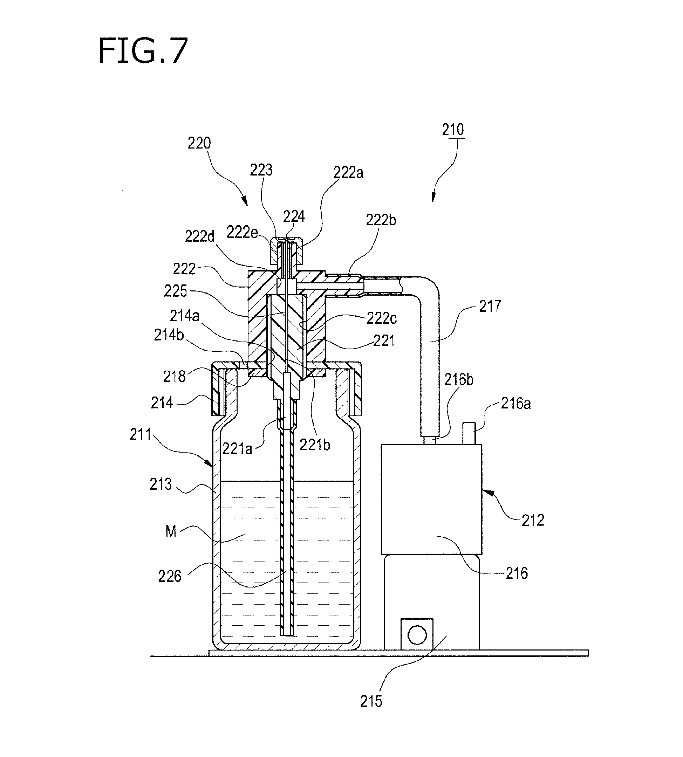

FIG. 7 is a longitudinal section illustrating a conventional pump type spraying device 210 used in Comparative Example 1 as described later.

A pump type spraying device 210 includes a liquid container 211 for containing a chemical liquid (chemical agent) M therein, an spraying unit 220 for spraying the chemical liquid M, and an air pump 212 that is a pressure pump for supplying compressed air into the spraying unit 220.

The liquid container 211 is a container formed by injection molding of a material having resistance to the chemical liquid M, for example, a synthetic resin or the like, and the liquid container 211 includes a container body 213 for housing the chemical liquid M therein and a lid body 214. A mounting hole 214a for mounting a needle holder 221 as described later and an air hole 214b for keeping a pressure within the liquid container 211 at atmospheric pressure (outside air pressure) are formed on an upper face of the lid body 214. The air hole 214b also functions as a safety mechanism for releasing a pressure generated within the liquid container 211 into an exterior. The lid body 214 is made attachable/detachable to/from the container body 213 by a screw or the like.

The air pump 212 includes a motor part 215 that rotates by an electric power supplied from a non-illustrated power source part, and a compressed air generating part 216 which is rotated and driven by the motor part 215, sucks air from a suction port 216a, and compresses it to discharge the compressed air from a discharge port 216b. Then, the discharge port 216b of the air pump 212 is connected with a nozzle holder 222 of the spraying unit 220 by a connecting tube 217.

The spraying unit 220 includes the needle holder 221, the nozzle holder 222, and a nozzle 223. The needle holder 221 is an approximately cylindrical member for pumping up the chemical liquid M to be contained in the liquid container 211, and in an axial center thereof, a large-diameter hole 221 a and a small-diameter hole 221 b are formed along the axial direction. In addition, a needle pipe (needle-like member) 225 that is a needle-like member is airtightly fixed to the small-diameter hole 221 b by means of press fitting, bonding, or the like.

In addition, a resin-made liquid suction tube 226 is airtightly fitted onto an end part on the side of the large-diameter hole 221 a of the needle holder 221. This liquid suction tube 226 is adjusted in a length such that its tip is located in the neighborhood of a bottom face of the container body 213 in a state where the needle holder 221 is fixed to the lid body 214.

The nozzle holder 222 is an approximately cylindrical member, and in an axial center on an upper end face thereof, a convex 222a for nozzle to be used for mounting the nozzle 223 is formed. In addition, a connecting pipe 222b for connecting the connecting tube 217 for connecting the spraying unit 220 and the air pump 212 with each other is formed on a side face of the nozzle holder 222. In addition, a nozzle holder-mounting hole 222c for screwing the needle holder 221, an air supply chamber 222d into which air is supplied from the air pump 212, and an air supply hole 222e for supplying air from the air supply chamber 222d into the nozzle 223 are formed in an axial center of the nozzle holder 222.

The nozzle 223 is a cylindrical lid body formed by injection molding of a metal, such as brass, etc., or a synthetic resin, or the like and is screwed on or engaged with the convex 222a for nozzle of the nozzle holder 222. In addition, a nozzle hole (aperture) 224 that penetrates through the needle pipe 225 is formed in an axial center of a top face of the nozzle 223.

Next, an action of the pump type spraying device 210 is explained.

As shown in FIG. 7, the pump type spraying device 210 allows the lid body 214 integrated with the spraying unit 220 to screw on the container body 213 in which the chemical liquid M is contained, allows the spraying unit 220 and the air pump 212 to connect with each other by the connecting tube 217, and supplies an electric power into the motor part 215 to drive the air pump 212, thereby discharging compressed air from the discharge port 216b of the compressed air generating part 216.

Then, the compressed air discharged from the air pump 212 is supplied into the air supply chamber 222d of the nozzle holder 222 via the connecting tube 217 and the connecting pipe 222b, pressure-supplied upwardly through the air supply hole 222e of the nozzle holder 222, and then vigorously spouted upwardly from a slight gap between the nozzle hole 224 of the nozzle 223 and the outer peripheral surface of the needle pipe 225.

At this time, since a negative pressure is generated between an upper end opening 224a of the nozzle hole 224 and an opening 225a of the needle pipe 225, the chemical liquid M within the liquid container 211 is pumped up via the liquid suction tube 226, the large-diameter hole 221 a of the needle holder 221, and the needle pipe 225, discharged from the opening 225a of the needle pipe 225, and then atomized and sprayed by the above-described compressed air to be vigorously spouted.

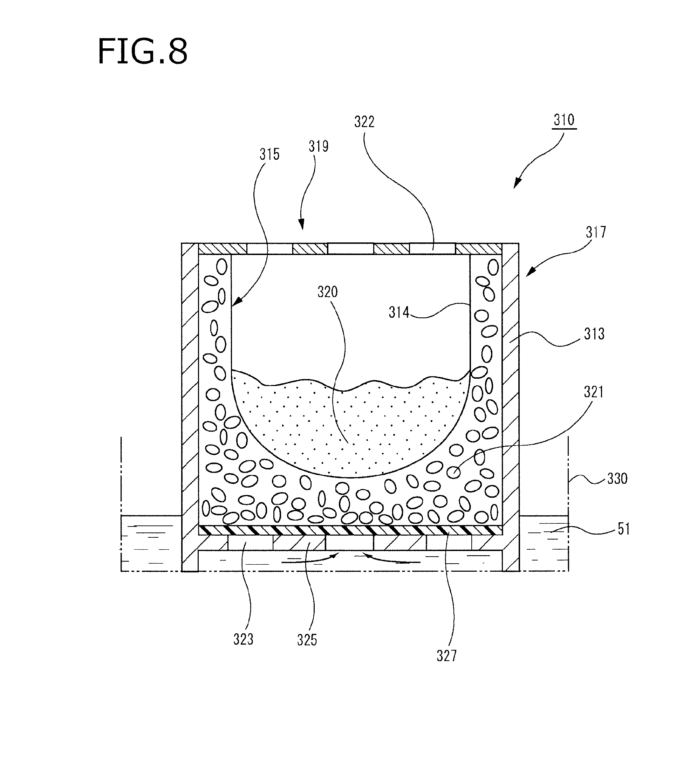

FIG. 8 is a longitudinal section illustrating a conventional thermal evaporation device 310 used in Comparative Example 2 as described later.

A thermal evaporation device 310 includes a heat generating device 317 constituted of a closed-end cylindrical outer container 313 and a chemical agent housing part 315 divided and formed by a partition member 314 in an interior of this outer container 313.

A hydration exothermic agent 321 is contained in an interior of the heat generating device 317 extending from the bottom to the side of the outer container 313. Not only the bottom of the heat generating device 317 is blocked up by a bottom plate 325 having a plurality of water passage holes 323, but also the water passage holes 323 are covered by a nonwoven fabric sheet 327 that is a water-permeable member. The partition member 314 is cylindrical and has an approximately hollow hemispherical bottom, and its side wall is arranged in a concentric state with the peripheral wall of the outer container 313.

In addition, the upper opening surface of the heat generating device 317 is crowned with a lid member 319 in which a plurality of apertures are formed in a region corresponding to the upper opening surface of the partition member 314, and the apertures of the lid member 319 are covered by a hot-melt film 322 having vent holes.

The hydration exothermic agent 321 is filled in a space formed by the peripheral wall of the outer container 313, the partition member 314, and the nonwoven sheet 327. A chemical agent containing a foaming agent and an insecticidal component (thermal evaporation preparation) 320 is contained in the chemical agent housing part 315 divided and formed in the interior of the partition member 314.

The hydration exothermic agent 321 is a substance undergoing self-heating by a reaction with the water 51, and for example, calcium oxide (calcined lime), magnesium chloride, aluminum chloride, calcium chloride, iron chloride, and the like may be used. According to such a constitution, the chemical agent 320 filled in the chemical agent housing part 315 becomes possible to be heated to 150°C or higher at least within one mixture after starting the heating by the hydration exothermic agent 321.

On the occasion of using the thermal evaporation device 310, the thermal evaporation device 310 is dipped in a water supply container 330 having the water 51 charged therein. Then, the water 51 flows in from the water passage holes 323 provided in the bottom of the outer container 313 and comes into contact with the hydration exothermic agent 321. At that time, the chemical agent 320 within the chemical agent housing part 315 is heated by a generated reaction heat and evaporated by a power of the foaming agent, and then released outside through the vent holes of the hot-melt film 322.

In addition, the hot-melt film 322 is thermally melted due to heat radiation from the hydration exothermic agent 321, the heat of the outer container 313, and the contact with the evaporated chemical agent 320. Therefore, the evaporated chemical agent 320 is efficiently released outside through the apertures of the lid member 319 from a relatively early time of the evaporation.

Here, characteristics features of the embodiments of the powdery chemical agent spraying apparatus and the powdery chemical agent spraying method according to the present invention as described above are concisely summarized and enumerated, respectively in the following [1] to [3].

[1] A powdery chemical agent spraying device 1, the device including:
   a container body 11 having an upper end opening 13;
   a cylindrical body 23 installed in a lid body 21 covering the upper end opening 13, both ends of cylindrical body 23 facing an interior and an exterior of the container body 11;
   a powdery chemical agent 30 that is a chemical agent itself, or in which a chemical agent is impregnated or mixed with a powder, the powdery chemical agent being contained in the cylindrical body 23; and
   a sealing film 25 that seal at least one end part of an interior side of the container body in the both ends of the cylindrical body 23 in which the powdery chemical agent 30 is contained,
   wherein a reactive gas is generated within the container body 11 to break the sealing film 25.
[2] A powdery chemical agent spraying device 1, the device including:
   a container body 11 having an upper end opening 13;
   a cylindrical body 23 installed in a lid body 21 covering the upper end opening 13, both ends of the cylindrical body 23 facing an interior and an exterior of the container body 11;
   a powdery chemical agent 30 that is a chemical agent itself, or in which a chemical agent is impregnated or mixed with a powder, the powdery chemical agent being contained in the cylindrical body 21; and
   sealing films 25 and 27 that seal the both ends of the cylindrical body 23 in which the powdery chemical agent 30 is contained, respectively,
   wherein the sealing film 27 for sealing the other end part of the exterior side of the container body 11 in the both ends of the cylindrical body 23 is made to have a film strength equal to the sealing film 25 for sealing one end part of the interior side of the container body 11 or such that the sealing film 27 for sealing the other end part is easily broken a little bit rather than the sealing film 25 for sealing the one end part; and
   wherein a reactive gas is generated within the container body 11 to break the sealing films 25 and 27.
[3] A method for spraying powdery chemical agent, the method including the steps of:
   generating a reactive gas within a container body 11 having an upper end opening 13,
   mounting a lid body 21, in which a cylindrical body 23 is installed, to the upper end opening 13 of the container body 11 such that both ends of the cylindrical body 23 face an interior and an exterior of the container body 11, a powdery chemical agent 30 that is a chemical agent itself, or in which a chemical agent is impregnated or mixed with a powder, being contained in the cylindrical body 23, and at least end part at an interior side of the container body in both ends of the cylindrical body 23 is sealed by a sealing films 25; and
   breaking the sealing films 25 and 27 by a gas pressure of the reactive gas reaching a prescribed value or more, thereby spraying and diffusing the powdery chemical agent 30 contained in the cylindrical body 23.

It is to be noted that the constituent members according to the powdery chemical spraying device of the present invention, such as the container body, the lid body, the cylindrical body, the powder, the active ingredient of the chemical agent, the chemical agent-impregnated powder, the sealing film, the liquid, the gas generating agent, etc., are not limited to the constitutions of the above-described embodiments, and a variety of modes may be taken on the basis of the gist of the present invention.

In the powdery chemical agent spraying device 1 of the above-described embodiments, the upper open end of the cylindrical body 23 sealed by the sealing film 27 is provided upwardly in the vertical direction, and the lower open end of the cylindrical body 23 sealed by the sealing film 25 is provided downwardly in the vertical direction. However, as a matter of course, as for the directions of the both open ends of the cylindrical body 23, a variety of directions, such as an obliquely upward direction, a horizontal direction, etc., may be taken.

In addition, in the powdery chemical agent spraying device 1 of the above-described embodiments, the both open ends of the cylindrical body 23 are sealed by a pair of the sealing films 25 and 27, respectively. However, at least one end part of the interior side of the container body 11 in the both ends of the cylindrical body 23 may also be sealed by the sealing film 25, while sealing the other end part of the exterior side of the container body 11 by a sealing member, such as a resin cap, etc. In this case, at the time of use, after removing the sealing member in advance, the reactive gas is generated to jet and diffuse the powdery chemical agent 30.

Moreover, a diameter-reduced nozzle may be provided in the other end part of the exterior side of the container body 11 in the cylindrical body 23, or the cylindrical body 23 may also be formed such that its diameter is reduced toward the other end part of the exterior side of the container body 11, thereby forming the cylindrical body 23 itself in a nozzle shape. By providing the cylindrical body 23 with a nozzle, a wind velocity at the time of spraying increases, whereby the powdery chemical agent 30 may be farther diffused.

In addition, the present application is based on a Japanese patent application (No. 2012-264384) filed on December 3, 2012, the contents of which are incorporated herein by reference.

### EXAMPLES

The present invention is hereunder specifically explained with reference to Examples. However, it should not be construed that the present invention is limited to these Examples.

### (Example 1)

First of all, in order to confirm a spraying effect of the powdery chemical agent spraying device 1 according to the present invention, a measuring test of falling amount of chemical agent on floor face of d·d-T-cyphenothrin (trade name: GOKILAHT S, manufactured by Sumitomo Chemical Co., Ltd.) and dinotefuran (trade name: STARCL, manufactured by Mitsui Chemical Agro, Inc.) using the powdery chemical agent spraying device 1 was conducted. In the powdery chemical agent spraying device 1 of Example 1, the breaking strength of the sealing films 25 and 27 was set to 100 kPa. It is to be noted that the test was conducted by using compressed air of a rolling pump and making the pressure to be applied to the sealing films 25 and 27 uniform at 100 kPa so as not to generate a deviation in the gas pressure at the time of breaking in every test. Contents of the test are as follows.

### [Measuring test of falling amount of chemical agent on floor face]

### (Test method)

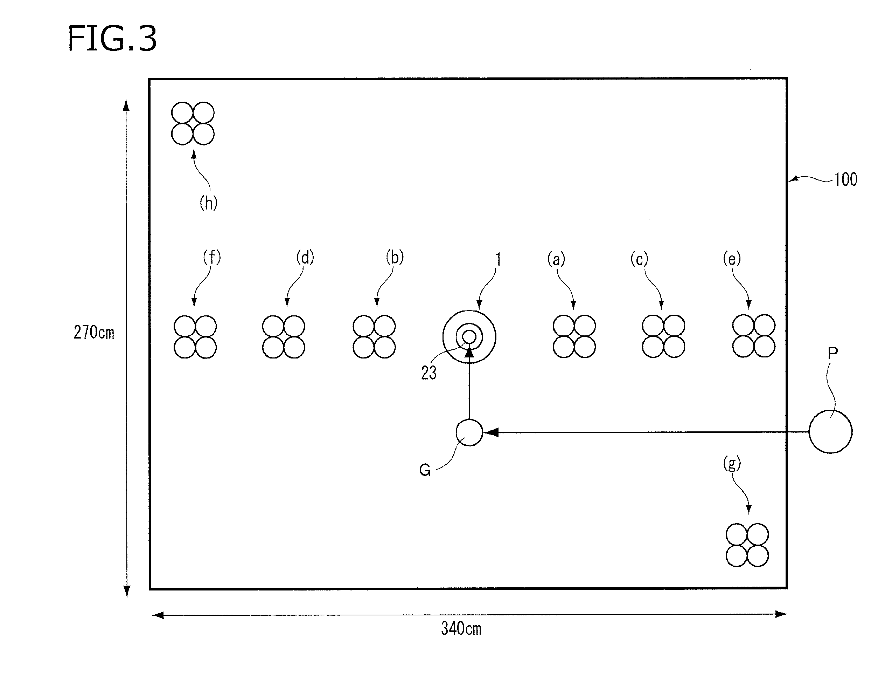

1. A test plot having a floor area of about 9 m² (270 cm in length × 340 cm in width × 15 cm in height) as shown in FIG. 3 was set in the interior of a room of 470 cm in length × 540 cm in width. The cylindrical body 23 connected directly with a rolling pump P is placed in the center of a test plot floor face 100; metal-made Petri dishes are placed at a plurality of Petri dish placing positions (a) to (f) at intervals of 50 cm, 100 cm, and 150 cm, respectively far from the powdery chemical agent spraying device 1, respectively on the both sides thereof; and metal-made Petri dishes are placed at Petri dish placing positions (g) and (h) diagonally across from each other at an interval of 200 cm. Four sheets of the metallic Petri dishes were placed at each of the Petri dish placing positions (a) to (h), and the Petri dishes were placed such that the center of the four sheets was located at intervals of 50 cm, 100 cm, 150 cm, and 200 cm, respectively far from the powdery chemical agent spraying device 1.
2. Four kinds of the powdery chemical agent 30 are sprayed by the powdery chemical agent spraying device 1 in which a discharge port of the rolling pump P is connected directly with the cylindrical body 23, and after passing 1.5 hours, the metallic Petri dishes at the Petri dish placing positions (a) to (h) are recovered. It is to be noted that in order to confirm the occurrence of breaking of the sealing films 25 and 27 at the pressure of 100 kPa in every test, a pressure gauge G was placed between the discharge port of the rolling pump P and the cylindrical body 23.
3. The amount of each of d·d-T-cyphenothrin and dinotefuran in the four kinds of the powdery chemical agent 30 is analyzed from the insides of the recovered metallic Petri dishes at each of the Petri dish placing positions (a) to (h).
4. A falling amount of chemical agent per unit area (mg/m²) of each of d·d-T-cyphenothrin and dinotefuran is calculated on the base of the analysis results.

The results of the measuring test of falling amount of chemical agent on floor face, as conducted plural times, respectively, are shown in the following Tables 1 to 4.

### (Test conditions)

### 1. Powdery chemical agent spraying device:

Device in which the discharge port of the pump (rolling pump, manufactured by Okenseiko Co., Ltd.; two pumps of Model Nos. P30C02R8516 and M42C02R8516 coupled with each other) P is connected directly with the cylindrical body 23

Cylindrical body 23: Acrylic pipe having an inside diameter of 7 mm and a length of 50 mm

Sealing film 25: Parafilm (trade name: PARAFILM M, 4 inch × 125 feet)

Sealing film 27: Parafilm (trade name: PARAFILM M, 4 inch × 125 feet)

The Parafilm was wound around each end part of the cylindrical body 23 to prepare the sealing films 25 and 27, respectively. In order to measure the strength of each of the sealing films 25 and 27, the pressure gauge G was placed between the cylindrical body 23 and the pump P, and pressurization with compressed air of the pump (rolling pump, manufactured by Okenseiko Co., Ltd.; two pumps of Model Nos. P30C02R8516 and M42C02R8516 coupled with each other) P was conducted, thereby measuring a pressure at the time of breaking of each of the sealing films 25 and 27.

The Parafilm was wound without being stretched and adjusted such that a pressure at the time of breaking of each of the sealing films 25 and 27 was 100 kPa. 2. Powdery chemical agent 30:

### (Chemical agent A)

18 mg of d·d-T-cyphenothrin (trade name: GOKILAHT S) dissolved in acetone was impregnated with 36 mg of calcium silicate (trade name: FLUORITE RN), and the acetone was then removed by means of air-drying, thereby making a total amount to 54 mg (calcium silicate/d·d-T-cyphenothrin = 2/1).

### (Chemical agent B)

18 mg of a dinotefuran bulk powder (trade name: STARCL)

### (Chemical agent C)

18 mg of dinotefuran was mixed with 162 mg of a starch powder (trade name: AMYCOL H) to make a total amount to 180 mg (starch powder/dinotefuran = 9/1)

### (Chemical agent D)

18 mg of dinotefuran (trade name: STARCL) dissolved in acetone was impregnated with 36 mg of calcium silicate (trade name: FLUORITE RN), and the acetone was then removed by means of air-drying, thereby making a total amount to 54 mg (calcium silicate/STARCL = 2/1).

### 3. Petri dish placing positions (a) to (h):

Area: 254.4 cm² (63.6 cm²/metallic Petri dish)

### (Test results)

### 1. Falling amount of chemical agent of d·d-T-cyphenothrin:

**Table 1**

| (Chemical agent A) | | |
|---|---|---|
| Number of times | Petri dish placing position | Falling amount of chemical agent per unit area (average value) (mg/m²) |
| First time | 50 cm | 0.52 |
| | 100 cm | 0.30 |
| | 150 cm | 0.32 |
| | 200 cm | Not carried out |
| Second time | 50 cm | 0.94 |
| | 100 cm | 0.19 |
| | 150 cm | 1.52 |
| | 200 cm | 0.30 |
| Third time | 50 cm | 0.11 |
| | 100 cm | 0.09 |
| | 150 cm | 0.26 |
| | 200 cm | 0.18 |
| Average | 50 cm | 0.52 |
| | 100 cm | 0.19 |
| | 150 cm | 0.70 |
| | 200 cm | 0.24 |

### 2. Falling amount of chemical agent of dinotefuran:

**Table 2**

| (Chemical agent B) | | |
|---|---|---|
| Number of times | Petri dish placing position | Falling amount of chemical agent per unit area (average value) (mg/m²) |
| First time | 50 cm | 0.01 |
| | 100 cm | 0.01 |
| | 150 cm | 0.01 |
| | 200 cm | Not carried out |
| Second time | 50 cm | 0.10 |
| | 100 cm | 0.16 |
| | 150 cm | 0.04 |
| | 200 cm | 0.08 |
| Third time | 50 cm | 0.13 |
| | 100 cm | 0.19 |
| | 150 cm | 0.27 |
| | 200 cm | 0.35 |
| Average | 50 cm | 0.08 |
| | 100 cm | 0.12 |
| | 150 cm | 0.11 |
| | 200 cm | 0.22 |

**Table 3**

| (Chemical agent C) | | |
|---|---|---|
| Number of times | Petri dish placing position | Falling amount of chemical agent per unit area (average value) (mg/m²) |
| First time | 50 cm | 0.84 |
| | 100 cm | 0.57 |
| | 150 cm | 0.14 |
| | 200 cm | 0.35 |
| Second time | 50 cm | 0.72 |
| | 100 cm | 0.06 |
| | 150 cm | 0.09 |
| | 200 cm | 0.24 |
| Third time | 50 cm | 1.65 |
| | 100 cm | 0.10 |
| | 150 cm | 0.16 |
| | 200 cm | 0.21 |
| Average | 50 cm | 1.07 |
| | 100 cm | 0.24 |
| | 150 cm | 0.13 |
| | 200 cm | 0.27 |

**Table 4**

| (Chemical agent D) | | |
|---|---|---|
| Number of times | Petri dish placing position | Falling amount of chemical agent per unit area (average value) (mg/m²) |
| First time | 50 cm | 0.03 |
| | 100 cm | 0.06 |
| | 150 cm | 0.05 |
| | 200 cm | Not carried out |
| Second time | 50 cm | 0.03 |
| | 100 cm | 0.06 |
| | 150 cm | 0.07 |
| | 200 cm | 0.21 |
| Third time | 50 cm | 0.22 |
| | 100 cm | 0.32 |
| | 150 cm | 0.39 |
| | 200 cm | 0.44 |
| Average | 50 cm | 0.09 |
| | 100 cm | 0.15 |
| | 150 cm | 0.17 |
| | 200 cm | 0.32 |

It can be confirmed from Tables 1 to 4 that the calcium silicate having an insecticidally effective amount of d·d-T-cyphenothrin or dinotefuran impregnated therewith, the starch powder having dinotefuran mixed therewith, and the dinotefuran bulk powder that is a powdery chemical agent can be diffused over the whole range of 200 cm from the device.

It may be presumed that what the analysis values of dinotefuran are low is caused due to the fact that dinotefuran is a bulky powder, so that even after 1.5 hours of spraying, the amount of the chemical agent floating in air is lager. On the other hand, in view of the fact that d·d-T-cyphenothrin impregnated with calcium silicate is a viscous liquid, it may be considered that the density of the powdery chemical agent increased, and the chemical agent fell over the whole range of 200 cm from the powdery chemical agent spraying device 1.

### (Example 2)

Next, in order to confirm an insect pest-controlling effect using the powdery chemical agent spraying device 1 according to the present invention, an insecticidal effectiveness test was conducted. An effectiveness test using each of dinotefuran and d·d-T-cyphenothrin as an insecticidal active ingredient was conducted. Contents of the test are as follows.

### [Effectiveness test]

### (Test method)

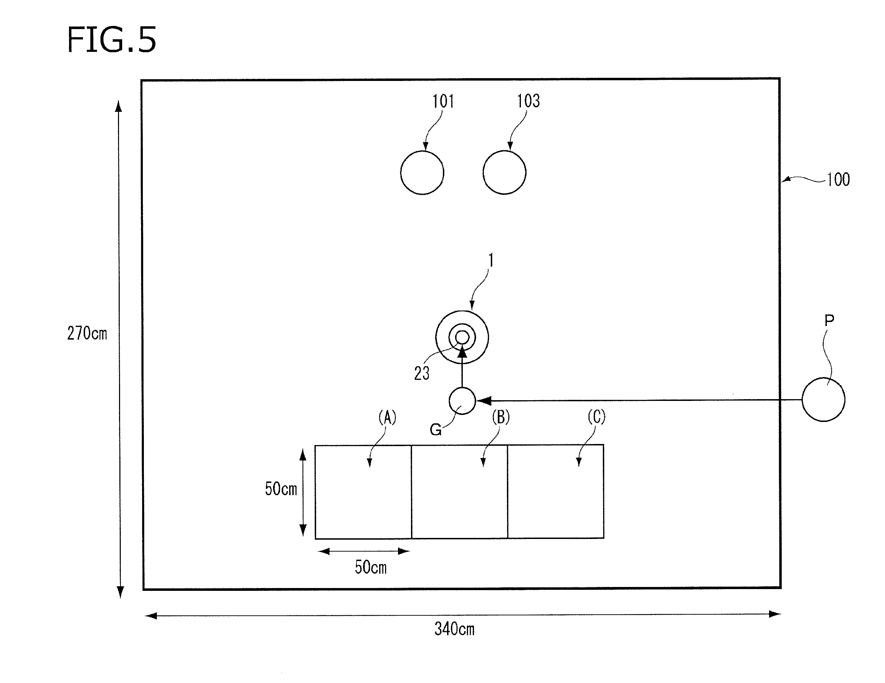

1. A test plot having a floor area of about 9 m² (270 cm in length × 340 cm in width × 15 cm in height) as shown in FIG. 5 was set in the interior of a room of 470 cm in length × 540 cm in width. The powdery chemical agent spraying device 1 in which the cylindrical body 23 is connected directly with a pump P is placed in the center of a test plot floor face 100; corrugated boxes (A), (B), and (C) each imitating a gap between a kitchen sink and a refrigerator are arranged near one side of the test plot floor face 100 (lower portion in FIG. 5); and a bait 101 and water 103 are arranged near the other side of the test plot floor face 100 (upper portion in FIG. 5).
2. Smoky-brown cockroaches are released on the test plot floor face 100 and habituated in the corrugated boxes (A), (B), and (C), and thereafter, the powdery chemical agent 30 is sprayed from the powdery chemical agent spraying device 1 in which a discharge port of the pump P set up at a pressure of 100 kPa is connected directly with the cylindrical body 23. (Number of test insects: 49 females and 48 males for dinotefura and 50 females and 49 males for d·d-T-cyphenothrin)
3. At the passage of a prescribed time (d·d-T-cyphenothrin: every 30 minutes until the passage of 3 hours, and thereafter, at the passage of 6 hours, at the passage of 20 hours, at the passage of 24 hours, and at the passage of 48 hours; and dinotefuran: at the passage of 1.5 hours, at the passage of 2 hours, at the passage of 14.5 hours, at the passage of 16 hours, at the passage of 23 hours, at the passage of 43 hours, and at the passage of 48 hours), the knockdown (KD) number and the mortality inside and outside the corrugated boxes (A), (B), and (C) are counted.
4. A knockdown (KD) rate and a mortality rate at every passage of a time based on the count number are calculated.

The results by the above-described effectiveness test are shown in the following Tables 5 and 6.

### (Test conditions)

### 1. Powdery chemical agent spraying device:

Device in which the discharge port of the pump (rolling pump, manufactured by Okenseiko Co., Ltd.; two pumps of Model Nos. P30C02R8516 and M42C02R8516 coupled with each other) P is connected directly with the cylindrical body 23 (In order to confirm a breaking pressure of each of the sealing films 25 and 27, a pressure gauge G is placed therebetween.)

Cylindrical body 23: The same as the cylindrical body 23 used in the measuring test of falling amount of chemical agent on floor face of Example 1.

Sealing films 25 and 27: The same as the sealing films 25 and 27 used in the measuring test of falling amount of chemical agent on floor face of Example 1.

### 2. Powdery chemical agent 30:

### (Chemical agent E)

18 mg of d·d-T-cyphenothrin dissolved in acetone was impregnated with 36 mg of calcium silicate (trade name: FLUORITE RN), and the acetone was then removed by means of air-drying, thereby making a total amount to 54 mg (calcium silicate/d·d-T-cyphenothrin = 2/1).

### (Chemical agent F)

18 mg of dinotefuran was used as the chemical agent.

### 3. Corrugated box:

Corrugated boxes (A) and (B): Two holes (2 cm × 2 cm) through which the cockroach can come and go are opened in front of a corrugated box of 50 cm in length × 50 cm in width × 25 cm in height.

Corrugated box (C): The front and the rear of a corrugated box of 50 cm in length × 50 cm in width × 3 cm in height are fully opened.

**Table 5**

| (Chemical agent E) | | | | | | |
|---|---|---|---|---|---|---|
| Passage of time (hr) | KD | | Mortality | | KD and mortality | |
| | (Heads) | (%) | (Heads) | (%) | (Heads) | (%) |
| 0.5 | 2 | 2 | 0 | 0 | 2 | 2 |
| 1 | 16 | 16 | 0 | 0 | 16 | 16 |
| 1.5 | 36 | 36 | 0 | 0 | 36 | 36 |
| 2 | 57 | 58 | 0 | 0 | 57 | 58 |
| 2.5 | 78 | 79 | 0 | 0 | 78 | 79 |
| 3 | 95 | 96 | 0 | 0 | 95 | 96 |
| 6 | 97 | 98 | 0 | 0 | 97 | 98 |
| 20 | 76 | 77 | 23 | 23 | 99 | 100 |
| 24 | 58 | 59 | 41 | 41 | 99 | 100 |
| 48 | 17 | 17 | 82 | 83 | 99 | 100 |

**Table 6**

| (Chemical agent F) | | | | | | |
|---|---|---|---|---|---|---|
| Passage of time (hr) | KD | | Mortality | | KD and mortality | |
| | (Heads) | (%) | (Heads) | (%) | (Heads) | (%) |
| 1.5 | 2 | 2 | 0 | 0 | 2 | 2 |
| 2 | 3 | 3 | 0 | 0 | 3 | 3 |
| 14.5 | 42 | 43 | 15 | 15 | 57 | 59 |
| 16 | 36 | 37 | 33 | 34 | 69 | 71 |
| 23 | 24 | 25 | 56 | 58 | 80 | 82 |
| 43 | 17 | 18 | 76 | 78 | 93 | 96 |
| 48 | 15 | 15 | 78 | 80 | 93 | 96 |

From the results of Table 6 of the effectiveness test using dinotefuran, it was confirmed that even in the case of using, as the chemical agent, a non-volatile insecticide, a high effectiveness is obtained. In addition, as is clear from Table 5, even in the case of using, as the chemical agent, d·d-T-cyphenothrin that is a pyrethroid-based insecticide, a high insect pest-exterminating effect could be obtained.

### (Example 3)

Next, in order to confirm the insect pest-controlling effect by the powdery chemical agent spraying device 1 according to the present invention, the confirmation was made by conducting a test using a chemical agent containing, as an active ingredient, d·d-T-cyphenothrin that is an insecticidal component. Contents of the test are as follows.

### [Effectiveness test]

### (Test method)

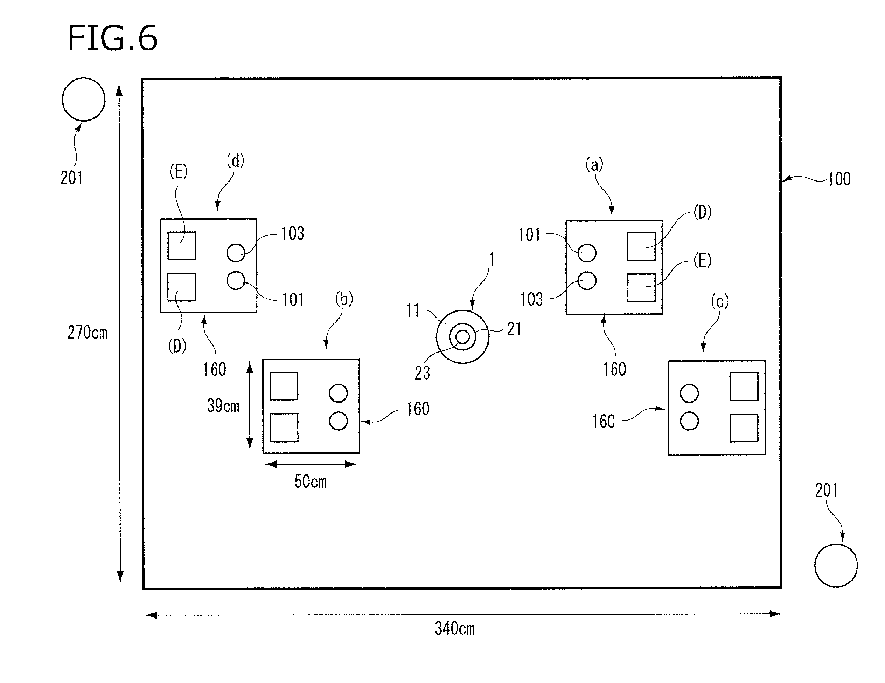

1. A test plot having a floor area of about 9 m² (270 cm in length × 340 cm in width × 15 cm in height) as shown in FIG. 6 was set in the interior of a room of 470 cm in length × 540 cm in width. The powdery chemical agent spraying device 1 is placed in the center of a test plot floor face 100; test containers 160 having a bottom area of about 0.2 cm² (39 cm in length × 50 cm in width × 17 cm in height) are placed at container placing positions (a) and (b) at an interval of 50 cm, respectively far from the powdery chemical agent spraying device 1, respectively on the both sides thereof; and furthermore, test containers 160 are placed at container placing positions (c) and (d) at an interval of 100 cm far from the powdery chemical agent spraying device 1, respectively on the both sides thereof. In each of the test containers 160, plastic boxes (D) and (E) each imitating a gap between a kitchen sink and a refrigerator are arranged near one side thereof; and a bait 101 and water 103 are arranged near the other side.
2. In each of the test containers 160, 10 females and 10 males of smoky-brown cockroaches are released and habituated in the test container 160, and thereafter, the powdery chemical agent 30 is sprayed from the powdery chemical agent spraying device 1. The sprayed powdery chemical agent 30 was diffused up to the outside of the test plot.
3. At the passage of 1 hour, at the passage of 3 hours, at the passage of 6 hours, at the passage of 18 hours, at the passage of 24 hours, and at the passage of 48 hours, the knockdown (KD) number and the mortality within the test container 160 are counted at every position in the container placing positions (a) and (b) and the container placing positions (c) and (d).
4. A knockdown (KD) rate and a mortality rate at every passage of a time based on the count number are calculated.

The results of the above-described effectiveness test, as conducted 3 times, respectively, are shown in the following Tables 7 and 8.

### (Test conditions)

1. Powdery chemical agent spraying device 1:
   Container body 11: PET bottle having a capacity of 280 mL
   Cylindrical body 23: Acrylic pipe having an inside diameter of 7 mm and a length of 50 mm
   Sealing film 25: Parafilm (trade name: PARAFILM M, 4 inch × 125 feet)
   Sealing film 27: Parafilm (trade name: PARAFILM M, 4 inch × 125 feet)

The Parafilm was wound around each end part of the cylindrical body 23 to prepare the sealing films 25 and 27, respectively. In order to measure the strength of each of the sealing films 25 and 27, pressurization with compressed air of a pump (rolling pump, manufactured by Okenseiko Co., Ltd.; two pumps of Model Nos. P30C02R8516 and M42C02R8516 coupled with each other) was conducted, thereby previously measuring and confirming the matter that a pressure at the time of breaking of each of the sealing films 25 and 27 was 100 kPa.

The Parafilm was wound without being stretched and adjusted such that a pressure at the time of breaking of each of the sealing films 25 and 27 was 100 kPa.

### 2. Powdery chemical agent 30:

### (Chemical agent G)

18 mg of d·d-T-cyphenothrin (trade name: GOKILAHT S) dissolved in acetone was impregnated with 36 mg of calcium silicate, and the acetone was then removed by means of air-drying, thereby making a total amount to 54 mg (calcium silicate/d·d-T-cyphenothrin = 2/1).

### 3. Gas generating agent:

Water 51: 100 mL
Sodium bicarbonate 41: 3.8 g
Citric acid 43: 2.9 g

### 4. Plastic box:

Plastic box (D): Two holes of 20 mm × 20 mm are opened in front of a plastic box of 210 mm in length × 133 mm in width × 35 mm in height.

Plastic box (E): The front and the rear of a plastic box of 210 mm in length × 133 mm in width × 35 mm in height are fully opened.

**Table 7**

| Passage of time (hr) | * KD rate (%) | | | | * Mortality rate (%) | | | | KD and mortality (%) | | | |
|---|---|---|---|---|---|---|---|---|---|---|---|---|
| | First time | Second time | Third time | Average | First time | Second time | Third time | Average | First time | Second time | Third time | Average |
| 1 | 33 | 58 | 58 | 49 | 0 | 0 | 0 | 0 | 33 | 58 | 58 | 49 |
| 3 | 100 | 100 | 100 | 100 | 0 | 0 | 0 | 0 | 100 | 100 | 100 | 100 |
| 6 | 100 | 100 | 100 | 100 | 0 | 0 | 0 | 0 | 100 | 100 | 100 | 100 |
| 18 | 83 | 90 | 85 | 86 | 18 | 10 | 15 | 14 | 100 | 100 | 100 | 100 |
| 24 | 75 | 78 | 63 | 72 | 25 | 23 | 38 | 28 | 100 | 100 | 100 | 100 |
| 48 | 15 | 20 | 10 | 15 | 85 | 80 | 90 | 85 | 100 | 100 | 100 | 100 |

| | | | | | | | | | | | | |
|---|---|---|---|---|---|---|---|---|---|---|---|---|
| * The knockdown (KD) rate and the mortality rate are average values at the container placing positions (a) and (b), respectively. | | | | | | | | | | | | |

**Table 7**

| Passage of time (hr) | * KD rate (%) | | | | * Mortality rate (%) | | | | KD and mortality (%) | | | |
|---|---|---|---|---|---|---|---|---|---|---|---|---|
| | First time | Second time | Third time | Average | First time | Second time | Third time | Average | First time | Second time | Third time | Average |
| 1 | 65 | 80 | 53 | 66 | 0 | 0 | 0 | 0 | 65 | 80 | 53 | 66 |
| 3 | 100 | 100 | 100 | 100 | 0 | 0 | 0 | 0 | 100 | 100 | 100 | 100 |
| 6 | 100 | 100 | 100 | 100 | 0 | 0 | 0 | 0 | 100 | 100 | 100 | 100 |
| 18 | 78 | 88 | 90 | 85 | 23 | 13 | 10 | 15 | 100 | 100 | 100 | 100 |
| 24 | 65 | 80 | 78 | 74 | 35 | 20 | 23 | 26 | 100 | 100 | 100 | 100 |
| 48 | 13 | 10 | 8 | 10 | 88 | 90 | 93 | 90 | 100 | 100 | 100 | 100 |

| | | | | | | | | | | | | |
|---|---|---|---|---|---|---|---|---|---|---|---|---|
| * The knockdown (KD) rate and the mortality rate are average values at the container placing positions (c) and (d), respectively. | | | | | | | | | | | | |

It can be confirmed from Tables 7 and 8 that in accordance with the powdery chemical agent spraying device 1 according to the present invention, the cockroaches within the test plot floor face 100 of about 9 m² can be killed. In view of the fact that d·d-T-cyphenothrin impregnated with calcium silicate, as housed as the chemical agent within the cylindrical body 23, revealed the effect against the whole of insect pests within the test plot, it is evident that the powdery chemical agent 30 was efficiently sprayed and diffused by the powdery chemical agent spraying device 1.

It is understood from the foregoing results that the powdery chemical agent spraying device 1 shown in FIG. 1 is a very effective chemical agent spraying device capable of efficiently spraying and diffusing the chemical agent even in a broad space.

### [Referential Test]

At the time of the test of Example 3, a plastic cup 201 in a reverse truncated cone shape having an aperture of 13 cm and a height of 10 cm, in which 10 female smoky-brown cockroaches per place were put, was placed in two places of the floor face outside of the test plot (positions at an interval of 230 cm left and right far from the powdery chemical agent spraying device 1 along the diagonal line of one side of the test plot floor face 100) (see FIG. 6).

Similar to the above-described Example 3, at the passage of 1 hour, at the passage of 3 hours, at the passage of 6 hours, at the passage of 18 hours, at the passage of 24 hours, and at the passage of 48 hours, the knockdown (KD) number and the mortality within the plastic cup 201 in a reverse truncated cone shape are counted at every position in cup placing positions (230 cm in the left side) and (230 cm in the right side).

A knockdown (KD) rate and a mortality rate at every passage of a time based on the count number are calculated.

The results of the above-described effectiveness test, as conducted 2 times, respectively, are shown in the following Tables 9 and 10.

**Table 9**

| (230 cm in the left side) | | | | | | | | | |
|---|---|---|---|---|---|---|---|---|---|
| Passage of time (hr) | KD rate (%) | | | Mortality rate (%) | | | KD and mortality (%) | | |
| | Frist time | Second time | Average | Frist time | Second time | Average | Frist time | Second time | Average |
| 1 | 30 | 80 | 55 | 0 | 0 | 0 | 30 | 80 | 55 |
| 3 | 70 | 100 | 85 | 0 | 0 | 0 | 70 | 100 | 85 |
| 6 | 90 | 100 | 95 | 0 | 0 | 0 | 90 | 100 | 95 |
| 18 | 100 | 80 | 90 | 0 | 20 | 10 | 100 | 100 | 100 |
| 24 | 100 | 50 | 75 | 0 | 50 | 25 | 100 | 100 | 100 |
| 48 | 10 | 0 | 5 | 90 | 100 | 95 | 100 | 100 | 100 |

**Table 10**

| (230 cm in the right side) | | | | | | | | | |
|---|---|---|---|---|---|---|---|---|---|
| Passage of time (hr) | KD rate (%) | | | Mortality rate (%) | | | KD and mortality (%) | | |
| | Frist time | Second time | Average | Frist time | Second time | Average | Frist time | Second time | Average |
| 1 | 80 | 100 | 90 | 0 | 0 | 0 | 80 | 100 | 90 |
| 3 | 100 | 100 | 100 | 0 | 0 | 0 | 100 | 100 | 100 |
| 6 | 100 | 100 | 100 | 0 | 0 | 0 | 100 | 100 | 100 |
| 18 | 80 | 70 | 75 | 20 | 30 | 25 | 100 | 100 | 100 |
| 24 | 50 | 40 | 45 | 50 | 60 | 55 | 100 | 100 | 100 |
| 48 | 0 | 10 | 5 | 100 | 90 | 95 | 100 | 100 | 100 |

### (Example 4)

Next, in order to confirm an insect pest-controlling effect using the powdery chemical agent spraying device 1 according to the present invention, an effectiveness test was conducted by using a chemical agent composed of, as an active ingredient, dinotefuran that is an insecticidal component. Contents of the test are as follows.

### [Effectiveness test]

### (Test method)

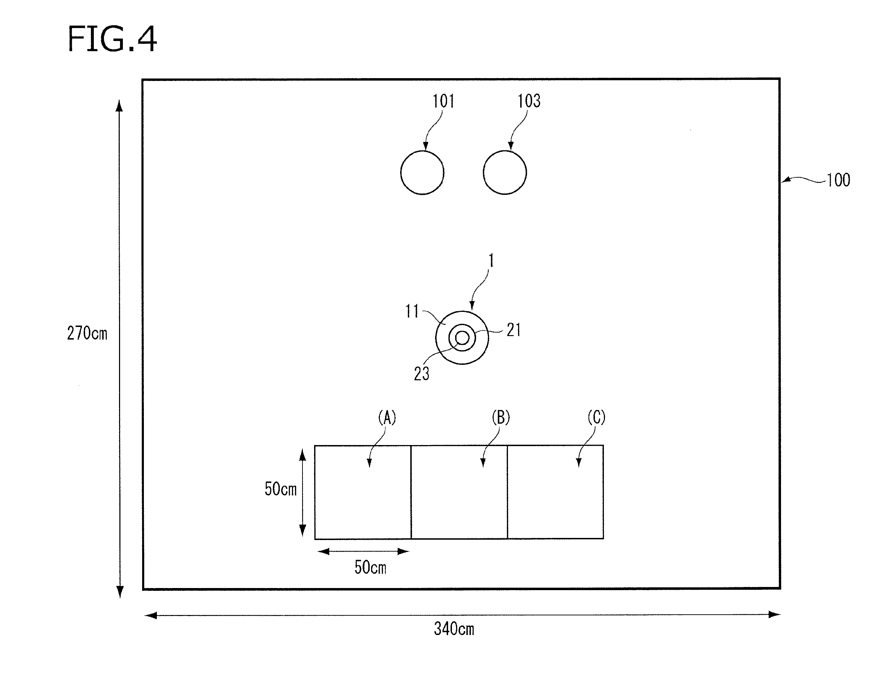

1. A test plot having a floor area of about 9 m² (270 cm in length × 340 cm in width × 15 cm in height) as shown in FIG. 4 was set in the interior of a room of 470 cm in length × 540 cm in width. The powdery chemical agent spraying device 1 is placed in the center of a test plot floor face 100; corrugated boxes (A), (B), and (C) each imitating a gap between a kitchen sink and a refrigerator are arranged near one side of the test plot floor face 100 (lower portion in FIG. 4); and a bait 101 and water 103 are arranged near the other side of the test plot floor face 100 (upper portion in FIG. 4).
2. 28 females and 29 males of smoky-brown cockroaches are released on the test plot floor face 100 and habituated in the corrugated boxes (A), (B), and (C), and thereafter, the powdery chemical agent 30 is sprayed from the powdery chemical agent spraying device 1. The sprayed powdery chemical agent 30 was diffused up to the outside of the test plot.
3. At the passage of a prescribed time (at the passage of 3 hours, at the passage of 6 hours, at the passage of 18 hours, at the passage of 24 hours, at the passage of 32 hours, and at the passage of 48 hours), the knockdown (KD) number and the mortality inside and outside the corrugated boxes (A), (B), and (C) are counted.
4. A knockdown (KD) rate and a mortality rate at every passage of a time based on the count number are calculated.

The results by the above-described effectiveness test are shown in the following Table 11.

### (Test conditions)

### 1. Powdery chemical agent spraying device 1:

Container body 11: PET bottle having a capacity of 280 mL

Cylindrical body 23: Acrylic pipe having an inside diameter of 7 mm and a length of 50 mm

Sealing film 25: Parafilm (trade name: PARAFILM M, 4 inch × 125 feet)

Sealing film 27: Parafilm (trade name: PARAFILM M, 4 inch × 125 feet)

The Parafilm was wound around each end part of the cylindrical body 23 to prepare the sealing films 25 and 27, respectively. In order to measure the strength of each of the sealing films 25 and 27, pressurization with compressed air of a pump (rolling pump, manufactured by Okenseiko Co., Ltd.; two pumps of Model Nos. P30C02R8516 and M42C02R8516 coupled with each other) was conducted, thereby previously measuring and confirming the matter that a pressure at the time of breaking of each of the sealing films 25 and 27 was 100 kPa.

The Parafilm was wound without being stretched and adjusted such that a pressure at the time of breaking of each of the sealing films 25 and 27 was 100 kPa.

### 2. Powdery chemical agent 30:

18 mg of dinotefuran was used as the powdery chemical agent.

### 3. Gas generating agent:

Water 51: 100 mL

Sodium bicarbonate 41: 3.8 g

Citric acid 43: 2.9 g

### 4. Corrugated box:

Corrugated boxes (A) and (B): Two holes (2 cm × 2 cm) through which the cockroach can come and go are opened in front of a corrugated box of 50 cm in length × 50 cm in width × 25 cm in height.

Corrugated box (C): The front and the rear of a corrugated box of 50 cm in length × 50 cm in width × 3 cm in height are fully opened.

**Table 11**

| Passage of time (hr) | KD | | Mortality | | KD and mortality | |
|---|---|---|---|---|---|---|
| | (Heads) | (%) | (Heads) | (%) | (Heads) | (%) |
| 3 | 1 | 2 | 0 | 0 | 1 | 2 |
| 6 | 5 | 9 | 0 | 0 | 5 | 9 |
| 18 | 14 | 25 | 9 | 16 | 23 | 40 |
| 24 | 24 | 42 | 26 | 46 | 50 | 88 |
| 32 | 5 | 9 | 49 | 86 | 54 | 95 |
| 48 | 4 | 7 | 51 | 89 | 55 | 96 |

It can be confirmed from Table 11 that in accordance with the powdery chemical agent spraying device 1 according to the present invention, the cockroaches within the test plot floor face 100 of about 9 m² can be killed. Dinotefuran housed as the powdery chemical agent within the cylindrical body 23 of the container body 11 is a non-volatile insecticidal component, and in the case where it is once deposited on the floor face or the like, further diffusion by means of re-volatilization or the like may not be expected; however, in view of the fact that the effect was revealed in the whole of insect pests within the test plot, it is clear that the powdery chemical agent 30 was efficiently sprayed and diffused by the powdery chemical agent spraying device 1.

It is understood from the foregoing results that the powdery chemical agent spraying device 1 shown in FIG. 1 is a very effective chemical agent spraying device capable of efficiently spraying and diffusing the chemical agent even in a broad space.

### (Comparative Example 1)

An insecticidal effectiveness test with dinotefuran was conducted by using the conventional pump type spraying device 210 shown in FIG. 7.

### (Test conditions)

### 1. Pump type spraying device 210:

Air pump 212: Pressure pump having a discharge rate of 12 L/min

Nozzle 223: Inside diameter: 1.05 mm

### 2. Chemical agent:

Components shown in the following Table 12

**Table 12**

| Compounding component | Compounding amount |
|---|---|
| Dinotefuran | 5.0 g |
| 95% ethanol | 15 g |
| Citric anhydride | 1.5 g |
| Sodium hydroxide | 0.6 g |
| Purified water | To make 100 mL |

### (Test method)

1. A plastic cup in a reverse truncated cone shape having an aperture diameter of 13 cm and a height of 10 cm, in which 10 female smoky-brown cockroaches per place were put, was placed in two diagonally arranged places of a floor face in a living room having the number of tatami mats of 12 (19.4 m²).
2. The pump type spraying device 210 shown in FIG. 7 was placed in the center of the room, and 30 mL of the chemical agent (dinotefura: 1.5 g) was sprayed. In order to reproduce an actual living space, an air conditioner and a ventilation fan of the room were operated.
3. The knockdown (KD) number and the mortality were counted after 24 hours, 48 hours, and 72 hours after the spraying treatment, respectively.
4. A knockdown (KD) rate and a mortality rate at every passage of a time based on the count number were calculated. The test results are shown in the following Table 13. It is to be noted that the test was conducted two times, and the results are total values thereof.

**Table 13**

| Passage of time (hr) | KD | | Mortality | | KD and mortality | |
|---|---|---|---|---|---|---|
| | (Heads) | (%) | (Heads) | (%) | (Heads) | (%) |
| 24 | 34 | 85 | 6 | 15 | 40 | 100 |
| 48 | 22 | 55 | 16 | 40 | 38 | 95 |
| 72 | 16 | 40 | 23 | 58 | 39 | 98 |

As is clear from comparison of Table 11 with Table 13, in Example 4, the chemical agent in an extremely small amount as not more than one-eightieth that in Comparative Example 1 is subjected to the spraying treatment; however, in the case of using the powdery chemical agent spraying device 1 of the present application, the mortality rate after 24 hours and after 48 hours is higher than that in the case of using the pump of Comparative Example 1.

It is understood from the foregoing results that by using the powdery chemical agent spraying device 1 of the present application, the insect pests can be efficiently controlled with the chemical agent in a lower concentration.

### (Comparative Example 2)

A test for confirming the insecticidal effect of d·d-T-cyphenothrin was conducted by using the thermal evaporation device 310 shown in FIG. 8.

### (Test conditions)

### 1. Thermal evaporation device 310:

Outer container 313: Closed-end cylindrical container having a diameter of 52 mm

Partition member 314: Cylindrical member having a diameter of 38 mm and having an approximately hollow hemispherical bottom

Hydration exothermic agent 321: Calcium oxide: 65 g

### 2. Chemical agent:

10 g of components described in the following Table 14

**Table 14**

| Compounding component | Compounding amount |
|---|---|
| dd-T-Cyphenothrin | 26 mg |
| Pregelatinized starch | 0.2 g |
| Azodicarbonamide | Proper amount |
| Total | 10 g |

### (Test method)

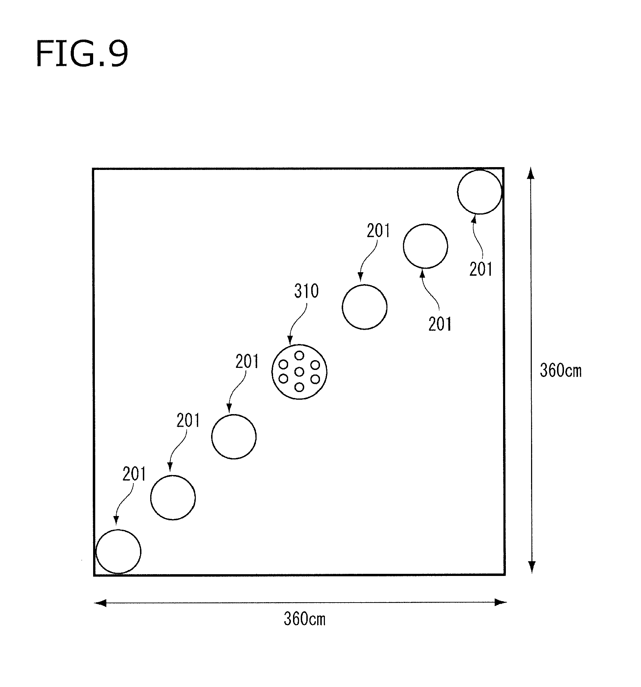

1. The thermal evaporation device 310 was placed on the floor face in the center of a living room of 360 cm in length × 360 cm in width (about 13 m²). As shown in FIG. 9, a plastic cup 201 in a reverse truncated cone shape having an aperture of 13 cm and a height of 10 cm, in which 10 female smoky-brown cockroaches per place are put, is placed at positions of 50 cm, 100 cm, and 250 cm, respectively far from the thermal evaporation device 310.
2. After a fumigation treatment using the thermal evaporation device 310, the chemical agent is exposed for 2 hours.
3. After completion of the exposure, the knockdown (KD) number and the mortality are counted after 24 hours and 48 hours, respectively.
4. A knockdown (KD) rate and a mortality rate at every passage of a time based on the count number of the above-described insecticidal effect test was conducted two times are calculated.

The results by the above-described insecticidal effect test are shown in the following Table 15. It is to be noted that the test was conducted two times, and the results are total values thereof.

**Table 15**

| | | | | | | | |
|---|---|---|---|---|---|---|---|
| 50 cm | Passage of time (hr) | KD | | Mortality | | KD and mortality | |
| | | (Heads) | (%) | (Heads) | (%) | (Heads) | (%) |
| | 2 | 40 | 100 | 0 | 0 | 40 | 100 |
| | 24 | 34 | 85 | 6 | 15 | 40 | 100 |
| | 48 | 0 | 0 | 31 | 78 | 31 | 78 |
| 100 cm | Passage of time (hr) | KD | | Mortality | | KD and mortality | |
| | | (Heads) | (%) | (Heads) | (%) | (Heads) | (%) |
| | 2 | 40 | 100 | 0 | 0 | 40 | 100 |
| | 24 | 7 | 18 | 33 | 83 | 40 | 100 |
| | 48 | 0 | 0 | 37 | 93 | 37 | 93 |
| 250 cm | Passage of time (hr) | KD | | Mortality | | KD and mortality | |
| | | (Heads) | (%) | (Heads) | (%) | (Heads) | (%) |
| | 2 | 10 | 100 | 0 | 0 | 40 | 100 |
| | 24 | 30 | 75 | 10 | 25 | 40 | 100 |
| | 48 | 0 | 0 | 24 | 60 | 24 | 60 |

As is clear from comparison of Table 15 with Tables 7 to 10, in Example 3, the chemical agent in an amount smaller than that in Comparative Example 2 is sprayed; however, in the case of using the powdery chemical agent spraying device 1 of the present application, the mortality rate after 48 hours is higher than that in the case of using the thermal evaporation device of Comparative Example 2. In particular, in comparison with Tables 9 and 10, it is understood that the mortality effect in the distance far from the specimen is very high.

It is understood from the foregoing results that by using the device for spraying powdery chemical agent of the present application, even insect pests inhabiting in distant places can be efficiently exterminated with the chemical agent in a lower concentration.

### INDUSTRIAL APPLICABILITY

According to the device for spraying powdery chemical agent and the powdery chemical agent spraying method of the present invention, it is not needed to dissolve the powdery chemical agent in a solvent or a liquefied gas, and it is not needed to apply heat for diffusion, and thus, chemical agents that are low in solubility, chemical agents that are instable in a liquid state, and chemical agents that are easily decomposed by heat can be used.

In addition, the powdery chemical agent in the cylindrical body can also be prevented from occurrence of decomposition by moisture of the outside air or oxidation, so that it can be stably preserved.

Furthermore, there is no concern about a fire or the like, and the device is safe, and a large-scaled apparatus is not needed, and thus, the device can be carried simply and easily and can be used even in a place where equipment, such as a power source, etc., is not provided.

### REFERENCE SIGNS LIST

1: Powdery chemical agent spraying device
11: Container body
13: Upper end opening
21: Lid body
23: Cylindrical body
25, 27: Sealing film
30: Powdery chemical agent
41: Sodium bicarbonate (gas generating agent)
43: Citric acid (gas generating agent)
51: Water (liquid)

## Claims

1. A device for spraying powdery chemical agent, the device comprising:
a container body having an upper end opening;
a cylindrical body installed in a lid body covering the upper end opening, both ends of the cylindrical body facing an interior and an exterior of the container body;
a powdery chemical agent that is a chemical agent itself, or in which a chemical agent is impregnated or mixed with a powder, the powdery chemical agent being contained in the cylindrical body; and
a sealing film that seals at least one end part of an interior side of the container body in the both ends of the cylindrical body in which the powdery chemical agent is contained,
wherein a reactive gas is generated within the container body to break the sealing film.

2. A device for spraying powdery chemical agent, the device comprising:
a container body having an upper end opening;
a cylindrical body installed in a lid body covering the upper end opening, both ends of the cylindrical body facing an interior and an exterior of the container body;
a powdery chemical agent that is a chemical agent itself, or in which a chemical agent is impregnated or mixed with a powder, the powdery chemical agent being contained in the cylindrical body; and
sealing films that seal the both ends of the cylindrical body in which the powdery chemical agent is contained, respectively,
wherein the sealing film for sealing the other end part of the exterior side of the container body in the both ends of the cylindrical body is made to have a film strength equal to the sealing film for sealing one end part of the interior side of the container body or such that the sealing film for sealing the other end part is easily broken a little bit rather than the sealing film for sealing the one end part; and
wherein a reactive gas is generated within the container body to break the sealing films.

3. A method for splaying powdery chemical agent, the method comprising the steps of:
generating a reactive gas within a container body having an upper end opening;
mounting a lid body, in which a cylindrical body is installed, to the upper end opening of the container body such that both ends of the cylindrical body face an interior and an exterior of the container body, a powdery chemical agent that is a chemical agent itself, or in which a chemical agent is impregnated or mixed with a powder, being contained in the cylindrical body, and at least end part at an interior side of the container body in both ends of the cylindrical body being sealed by a sealing film; and
breaking the sealing film by a gas pressure of the reactive gas reaching a prescribed value or more, thereby spraying and diffusing the powdery chemical agent contained in the cylindrical body.
